# EUROPEAN PATENT SPECIFICATION

(11) **EP 3 083 250 B1**
(45) Date of publication and mention of the grant of the patent: **20.02.2019**
(21) Application number: 14812857.2
(22) Date of filing: 03.12.2014
(51) Int. Cl.: B32B 37/02, B32B 37/20, B32B 38/06, B32B 27/20, E04F 15/10

(54) **CONTINUOUS FLOOR PRODUCT FORMING PROCESS**
KONTINUIERLICHES BODENPRODUKT-FORMUNGSVERFAHREN
PROCÉDÉ DE FORMATION DE PRODUIT DE PLANCHER CONTINU

(30) Priority: 16.12.2013 US 201314108019
(43) Date of publication of application: 26.10.2016
(73) Proprietor: Armstrong World Industries, Inc., Lancaster, Pennsylvania 17603 (US)
(72) Inventor: ANSPACH, Kean M., Quarryville, Pennsylvania 17566 (US); ESHBACH, John R., Marietta, Pennsylvania 17547 (US); CRITCHLOW, Noel L., Columbia, Pennsylvania 17512 (US); ZIRKEL, Eric C., Honey Brook, Pennsylvania 19344 (US)
(74) Representative: Jenkins, Peter David
(86) International application number: PCT/US2014/068332
(87) International publication number: WO 2015/094665

(56) References cited:
- WO-A1-2007/060754
- US-B1- 6 375 786
- US-B1- 6 649 248

## Description

### BACKGROUND

The present invention generally relates to systems and processes for forming floor covering products, and more particularly to a system and process suitable for continuously forming laminated resilient floor covering products.

In the production of composite laminated flooring covering products, a base layer generally comprising a thermoplastic material which may be provided in the form of a blanket or sheet is typically laminated over with a top wear layer and embossed to form a three-dimensional textured and patterned multilayered floor covering suited for application on a structural subfloor or other surface. Base layer materials used may include vinyl or non-vinyl plastics, which have been prepared and mixed with other materials including fillers, plasticizers, binders, stabilizers, and pigments to form a suitable composition as will be well known in the art. Polyvinyl chloride (PVC) is one common material used in floor covering products. The wear layer is exposed to foot and other traffic, and protects the underlying base material sheet and patterns or designs pre-printed or pre-applied thereon prior to lamination which show through the generally transparent or translucent wear layer. The base layer sheet is generally thicker than and supports the overlying thinner wear layer. Additional functional or decorative layers may be incorporated in the multilayered flooring composite structure.

Luxury vinyl flooring such as luxury vinyl tile (LVT) is a category of thermoplastic based flooring covering products that may replicate natural materials such as wood, stone, slate, marble, granite, and others. Such products strive to be more cost effective and offer consumers increased durability and lower maintenance in contrast to their natural counterparts while delivering an equivalent look and feel. LVT has particularly applicability to as a commercial flooring product where it may be subjected to high use and wear. Accordingly, it is desirable to provide a heavy gauge wear layer of suitable thickness to provide durability and longevity.

Continuous lamination processes offer production economies and allow laminated and embossed composite sheets of floor covering product to be efficiently produced in sheets or rolls, which in some cases may be subsequently cut into desired lengths and forms, such as without limitation tiles and planks of varying dimensions. Heretofore, these continuous lamination processes have generally been limited in their ability to satisfactorily produce thick wear layers compatible with the durability and longevity goals of LVT. Wear layers have been generally limited to thicknesses under 0.03 cm (12 mils (i.e. 0.012 inches)) to avoid detrimental impacts on manufacturing costs, process equipment durability, and/or product quality such as poor embossing or inadequate adhesion of the laminated wear layer to the base layer.

Production of LVT also generally requires a costly and time consuming annealing step for obtaining good adhesion of the wear layer to base layer and to provide good post-production dimensional stability of the product. This step usually involves cutting oversized piece of LVT product, heat treatment, and then re-cutting to final size.

An improved continuous lamination system and process is desirable.

WO 2007/060754 describes a high - gloss decorative sheet. While directed to building applications, this document is silent about the particular application as a floor covering. Even more, it is silent about applying to the base layer a film that is patterned since it is actually interested in a transparent film.

### SUMMARY

A continuous lamination system and process is provided according to the present disclosure that can be used to produce a LVT flooring laminate with a heavy gauge, relatively thick wear layer without suffering the drawbacks of foregoing prior processes. A wear layer comprised of rigid vinyl film (RVF) may be used. The term rigid vinyl film as used herein refers to a film produced from a vinyl composition, e.g., polyvinyl chloride, with no or substantially no plasticizer. In one embodiment, the process includes preheating the wear layer to a temperature sufficient to achieve good adhesion to the base layer while maintaining a high throughput rate or speed through the lamination station. Embodiments of the process may include further heating the wear and base layer laminate prior to embossing to facilitate forming a pattern of suitable definition and depth into the thicker wear layer. Advantageously, embodiments of the process described herein eliminates the annealing step in the formation of LVT laminate.

In various embodiments, wear layers may be used according to the process disclosed herein having thicknesses of 0.015 cm (6 mils (0.006)) or more. In certain non-limiting embodiments, the wear layer may have a thickness of about and including 0.05 cm (20 mils) or more.

In the invention, a process or method for forming a laminated floor covering product includes heating a base layer sheet comprising a plastic material to a first temperature, receiving the heated base layer sheet onto a surface of a rotating process drum, applying a patterned film to the base layer by laminating at a circumferential location on the process drum located before a first laminating station, preheating a wear layer film separate from the process drum to a second temperature, and laminating the wear layer film onto the patterned film sheet at the first laminating station, thereby forming a flooring laminate. The method may further include embossing the flooring laminate at a second laminating station after the laminating step. The method may further include heating the flooring laminate to a third temperature between the first and second laminating stations to improve the embossing results.

### BRIEF DESCRIPTION OF THE DRAWINGS

The features of the exemplary embodiments will be described with reference to the following drawing where like elements are labeled similarly, and in which:

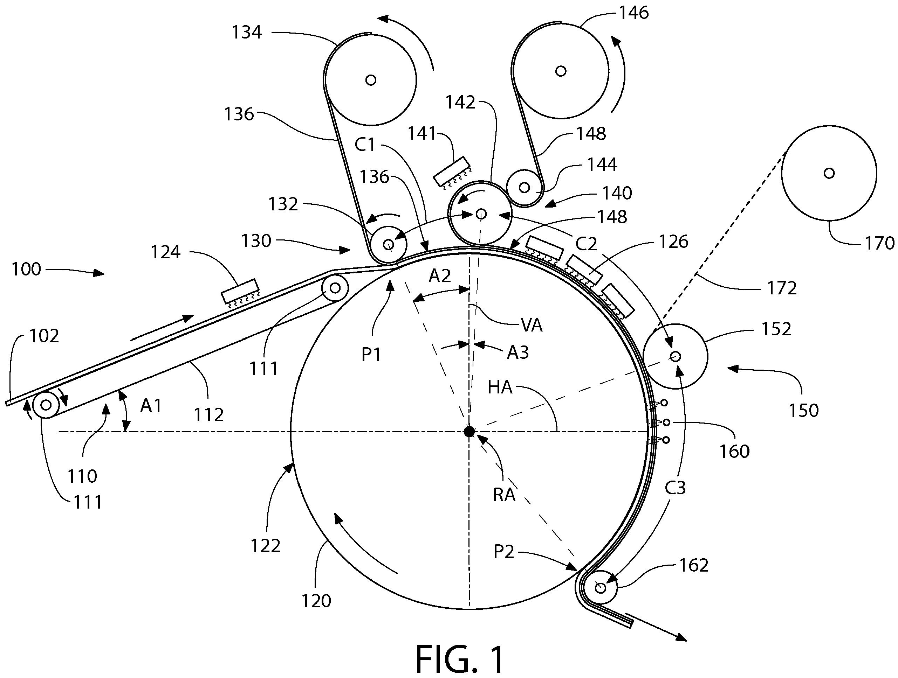

FIG. 1 is a side elevation schematic diagram of an exemplary embodiment of a laminating system according to the present disclosure.

### DETAILED DESCRIPTION OF EMBODIMENTS

The features and benefits of the present disclosure are illustrated and described herein by reference to exemplary embodiments. This description of exemplary embodiments is intended to be read in connection with the accompanying drawings, which are to be considered part of the entire written description. Accordingly, the present disclosure expressly should not be limited to such embodiments illustrating some possible non-limiting combination of features that may exist alone or in other combinations of features; the scope of the claimed invention being defined by the claims appended hereto.

In the description of embodiments disclosed herein, any reference to direction or orientation is merely intended for convenience of description and is not intended in any way to limit the scope of the present invention. Relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation. Terms such as "attached," "coupled," "affixed," "connected," "interconnected," and the like refer to a relationship wherein structures are secured or attached to one another either directly or indirectly through intervening structures, as well as both movable or rigid attachments or relationships, unless expressly described otherwise.

FIG. 1 is a side elevation schematic diagram showing an exemplary embodiment of a continuous laminating system 100 and associated process for producing resilient floor covering products according to the present disclosure. The floor covering product may be a plastic based laminated composition such as a vinyl or non-vinyl thermoplastic composition. In one embodiment, without limitation, the thermoplastic used in the product composition may be PVC. In one embodiment, the floor covering product produced by the laminating system 100 may be luxury vinyl tile (LVT).

It will be appreciated that although the terminology "floor covering product" is used herein without limitation for convenience of description only, such floor covering products produced by the present system and process may be applied to any suitable type and oriented surface including without limitation horizontal, vertical, and/or angled surfaces. Such application surfaces may include floors, walls, countertops, ceilings, and others. Accordingly, products formed according to the present disclosure are not limited in their application or use by the description and terminology used herein.

In one embodiment, laminating system 100 is a drum laminating system. In contrast to conveyor type laminating systems comprising one or more belts and a plurality of belt rollers, various printing, laminating, and embossing operations are performed at different locations spaced along the circumference of a large rotating drum.

Referring to FIG. 1, the laminating system 100 generally includes a mechanical base layer sheet carrier such as belt conveyor 110, a rotating main process drum 120 having a diameter, and one or more laminating stations associated with the drum. The laminating stations may include a printing station 130, a wear layer laminating station 140, and an embossing station 150 disposed at different circumferential locations spaced around the drum, as shown and further described herein.

Drum 120 has a circumferential outer surface 122 as shown in FIG. 1. The rotating drum has a rotational axis RA at center which further defines a horizontal reference line HA and vertical reference line VA. Vertical reference line VA is disposed perpendicular or 90 degrees to horizontal reference line HA.

Process drum 120 is a generally cylindrical structure having a suitable diameter and width (measured into the page of FIG. 1) suitable for handling the width of the base layer sheet 102 being laminated. Outer surface 122 provides a rotating working surface for completing printing, laminating, and embossing operations on the composite floor covering product.

The diameter of process drum 120 controls the process speed and throughput of the laminating system 100. The diameter is therefore selected to provide adequate separation between the different stations and time for adhesion of the films on the base layer, heating the laminate to an appropriate temperatures during the laminating process, etc. In one exemplary embodiment, without limitation, drum 120 may have a diameter of about 2.4 meters (8 feet). Laminating system 100 and associated operating parameters will now further be described below with respect to a process drum 120 having a 2.4 meter (8 foot) diameter and a linear velocity of outer surface 122 of about 27.4 meter (90 feet) per minute (fpm). The linear velocity is measured at a point on surface 122 and has a line of action that is perpendicular to a radius line drawn from rotation center RA to the surface.

It will be appreciated that other suitable diameters up to a practical limit of about 3.7 meter (12 foot) diameter may be used depending on the linear velocity of the outer surface 122 of the rotating drum 120 and corresponding process time intervals necessary to properly complete the various floor covering product formation operations described herein. The linear velocity of outer surface 122 used in some exemplary embodiments is from about 24.4 to 30.5 meters per minute (from about 80 to 100 fpm) to optimize the drum size and processing time intervals.

Referring to FIG. 1, a base layer sheet 102 is initially provided as a starter material for the lamination process. Base layer sheet 102 may be spooled on a roll or bolt for convenience. Base layer sheet 102 may be any thermoplastic-based composition or mixture suitable for producing resilient laminated flooring. In one embodiment, sheet 102 is a vinyl composition such as without limitation PVC mixed with fillers, plasticizers, binders, stabilizers, and/or pigments.

Base layer sheet 102 may be any suitable thickness depending on the final floor covering product to be produced. Base layer sheet 102 may generally have a representative gauge or thickness ranging from about and including 0.10cm (40 mils) (thousandths of an inch) to about and including 0.64cm (250 mils). In some exemplary embodiments, base layer sheet 102 may have a thickness from about 0.25cm (100 mils) to about 0.37cm (145 mils) for LVT products.

With continuing reference to FIG. 1, base layer sheet 102 is first loaded onto conveyor 110. In one embodiment, conveyor 110 may be a belt type conveyor comprised of two or more rollers 111 and a continuous loop circulating belt 112 (circulating clockwise in the figure shown). In representative embodiments, the belt may be made a steel mesh.

Base layer sheet 102 is heated on conveyor 110 to a temperature above ambient of about 149°C - 182°C (300 - 360 degrees F) in exemplary embodiments. Any suitable type process heaters may be used. An example of a suitable heaters include radiant surface heaters 124 such as Radplane® Series Rapid Response Electric Infrared Heaters commercially available from Glenro Inc. of Paterson, New Jersey. The radiant heaters 124 may be suspended above and proximate to conveyor belt 112. One or several heating units may be provided and arranged as necessary to achieve the desired temperature, as will be known to those skilled in the art. Alternatively, one or more heated rollers 111 (e.g. electric, heated oil, etc.) may be used such as those commercially available from American Roller Company of Union Grove, Wisconsin. The heated rollers may be used alone or in conjunction with radiant surface heaters. Adjustable heater controls are provided which are configured to regulate the heat output from either type heater used and maintain the temperature of the base layer sheet 102 within the desired range.

Next, base layer sheet 102 is transferred from conveyor 110 onto circumferential outer surface 122 of rotating process drum 120 as shown in FIG. 1. In one embodiment, base layer sheet 102 is preferably transferred onto an upper portion of surface 122 (i.e. lying above horizontal reference line HA). In one embodiment, conveyor 110 may be oriented with respect to the process drum 120 to deliver base layer sheet 102 tangentially onto the outer surface 122 of the drum as shown in FIG. 1. In one embodiment, conveyor 110 is obliquely oriented at an angle A1 with respect to horizontal reference line HA of the drum for that purpose. Angle A1 may be from about 1 to 90 degrees, preferably about 30 to 60 degrees in the embodiment shown. In an alternative embodiment, conveyor 110 may be horizontal and disposed at an angle A1 of 0 degrees similar to the arrangement shown U.S. Patent 4,804,429, which is incorporated herein by reference in its entirety.

In one embodiment and arrangement, as shown in FIG. 1, a bottom surface of base layer sheet 102 may engage outer surface 122 of drum 120 at an initial contact point PI that is laterally offset from vertical reference line VA by an angle A2. The contact point may be disposed at an angle A2 measured with respect to vertical reference line VA that is about 20 degrees from vertical. Other suitable angular offset from vertical may be used.

In one embodiment, the outer surface 122 of the drum is maintained at a temperature between 93.3°C and 110.0°C (200 and 230 degree F) such that heated base layer sheet 102 temporarily adheres to the outer surface 122. Drum 120 may formed of a material that is operable to provide temperature controlled adherence and release of a base layer sheet 102 based on hot stick adherence and cold release principles, as will be well known to those skilled in the art. Vinyl-based products exhibit such characteristics and facilitates adherence of base layer sheet 102 to drum 120 for processing and lamination. In one embodiment, drum 120 may be made of steel and outer surface 122 may be chrome plated to provide a smooth surface.

With continuing reference to FIG. 1, the first laminating station encountered by base layer sheet 102 is printing station 130 located at the initial contact point PI of the base layer sheet with the drum 120. Printing station 130, which may be a laminating station in one embodiment, includes a laminating assembly comprised of a single roller 132 spaced apart from and in relatively close proximity to drum 120 thereby forming a gap or nip therebetween through which base layer sheet 102 passes. A preprinted patterned film 136 ("white film") having a pattern or design imprinted thereon is fed from a supply spool or roll 134 through the nip concurrently with base layer sheet 102. The patterned film 136 is adhered and laminated onto the top surface of the base layer sheet 102 by the heat and laminating pressure applied by the roller 132.

It should be noted that base layer sheet 102 is already heated above ambient conditions on conveyor 110 before reaching the printing station 130 (e.g. about 148.9°C-182.2°C (300 - 360 degrees F) in exemplary embodiments) as already described. Accordingly, roller 132 may be unheated in one embodiment as the already elevated temperature of the base layer sheet 102 is sufficient to adhere the patterned film 136 onto the base layer sheet upon contact.

Patterned film 136 may have any type pattern, design, indicia, and colored images imprinted on the film. For example, in some embodiments, the patterns and color may replicate wood, stone, slate, marble, granite, and other natural materials.

The second laminating station encountered by base layer sheet 102 is wear layer laminating station 140 where a wear layer film 148 is laminated via heat and pressure onto the base layer sheet composite. Laminating station 140 includes a laminating assembly comprised of at least one laminating roller 142 spaced apart from and in relatively close proximity to drum 120 forming a nip therebetween through which base layer sheet 102 with adhered pattern film 136 passes concurrently with wear layer film 148. Laminating roller 142 draws wear layer film 148 from supply spool or roll 146. Laminating roller 142 may have a generally smooth outer surface which contacts the wear layer film. In some embodiments, a second reverse roller 144 may be provided between the supply roll 146 and laminating roller 142 to facilitate wear layer film 148 to be properly placed on laminating roller 142 and to create suitable film tension to prevent wrinkling of wear layer film 148 before lamination to base layer sheet 102.

In one exemplary embodiment and arrangement, laminating roller 142 may be located at an angle A3 measured with respect to vertical reference line VA that is about 6 degrees from vertical.

Wear layer laminating station 140 is spaced apart from printing station 130 by an arcuate circumferential distance C1 measured along outer surface 122 of process drum 120 that is sufficient to allow the patterned film 136 to adhere sufficiently to base layer sheet 120 before laminating the wear layer film 148. In one exemplary embodiment, without limitation, circumferential distance C1 may be about 0.6 meters (2 feet) at a corresponding linear surface velocity or speed of 27.4 meters per minute (90 fpm) of drum surface 122 to provide a time period of about 1.3 seconds for the patterned film 136 to adhere to the base layer sheet before lamination of the wear layer film 148.

In some embodiments, the wear layer film 140 is a rigid vinyl film (RVF) having a thickness of at least 0.04cm (15 mils) or more to provide a durable and long lasting wear layer for protecting base layer sheet 102. Exemplary embodiments may have a desired RVF thickness of about 0.05 - 0.10cm (20-40 mils) which are suitable for LVT commercial application to provide satisfactory wear resistance performance to withstand heavy foot and other traffic. In one embodiment, a 20 mil RVF wear layer may be used. Semi-rigid vinyl films (Semi-RVF), which film composition contains a plasticizer, may also be used in the present process. Utilizing a semi-RVF may require additional post-product annealing steps to impart proper dimensional stability to the vinyl tile.

According to one aspect of the present invention, the wear layer film 148 is preheated prior to being laminated onto base layer sheet 102. The inventors have discovered through testing that preheating the wear layer film 148 improves adhesion of thick wear layers onto the base layer sheet 102 upon contact, and accordingly avoids blistering or wrinkling problems associated with using a thicker wear layer film (e.g. 0.03cm (12 mils) or higher). The inventors have further discovered that the preheating step is temperature sensitive to achieve proper adhesion of the wear layer film 148 to the base layer sheet 102. Preheating the wear layer film 148 either below or above an optimum temperature range creates process problems which interferes with proper adhesion.

Using a wear layer film 148 of about 0.05cm (20 mils) RVF, in one non-limiting embodiment, the film 148 is preferably preheated to a temperature between about and including 100 degrees F to about and including 76.7°C (170 degrees F) prior to lamination onto base layer sheet 102 at laminating station 140. This was found to produce immediate adhesion of the RVF wear layer to the base layer sheet 102 upon contact thereby preventing blistering and wrinkling problems.

At temperatures below the foregoing ranges, the wear layer film 148 wrinkles off of the base layer sheet 102 due to inadequate adhesion. At temperatures above the foregoing ranges, the wear layer film 148 sticks to laminating roller 142 and wrinkles at the nip because the film 148 is not released and free to slide on the roller face as needed.

The wear layer film 148 may be preheated to a predetermined temperature by any suitable method used in the art, including without limitation providing a heated roller 142 (e.g. electric, heated oil, etc.) and/or radiant surface heaters 141 similar to heaters 124 mounted proximate to film 148, such as those already described herein and above. In one exemplary embodiment, a heated roller is used. Reverse roller 144 may be unheated. Adjustable heater controls are provided to regulate the heat output from either type heater used and maintain the preheat temperature of the wear layer film 148 to the desired temperature.

In some configurations of the laminating system 100, the printing station 130 and wear layer laminating station 140 operations may be combined into a single laminating station instead of being performed separately on drum 120. Accordingly, laminating station 140 may preheat the wear layer film 148 and then combine and laminate the wear layer and patterned film 136 to base layer sheet 102 via laminating roller 142 in a single step. The feed of patterned film 136 from supply roll 134 may be directed to roller 142 instead of roller 132 (see FIG. 1) and combined with wear layer film 148 after heating the wear layer. The heated laminating steps of the invention that uses two mating rollers provides an improved gage, i.e., thickness, control of the resulting laminate and improves the surface of the laminate by pressing and spreading out surface imperfections that may be present on the wear layer film and the base layer sheet.

With continuing reference to FIG. 1, after lamination of the wear layer film 148 onto the base layer sheet 102, the multilayer laminate or composite continues to travel on process drum 120 (clockwise direction in this figure) towards the embossing station 150.

According to another aspect of the present invention, heating of the laminate now comprising the base layer sheet 102, patterned film 136 , and wear layer film 148 continues from the laminating station 140 to the embossing station 150 next encountered on process drum 120 for the embossing to be successful. In one embodiment, the laminate is heated to an elevated temperature prior to embossing so that the embossing temperature in one embodiment is higher than the preheat temperature of the wear layer film 148 at the wear layer laminating station 140. The inventors have discovered that heating the laminate prior to the embossing is beneficial with thicker wear layer films 148 (i.e. 0.03cm (12 mils) or higher) to achieve proper depth and definition of the embossed surface features in the laminate.

The laminate may be heated by any suitable method or combination of methods including radiant surface heating, via heat absorbed from the generally hotter bottom base layer sheet 102, or a combination thereof. In one exemplary embodiment, without limitation, radiant surface heating produced by one or more radiant heaters 126 disposed proximate to process drum 120 may be used as illustrated in FIG. 1. The radiant heaters 126 may be infrared heaters as already described herein, or another suitable type surface heater operable to raise the temperature of the laminate prior to embossing.

The embossing station 150 is separated from the wear layer laminating station 140 by an arcuate circumferential distance C2 (see FIG. 1). Distance C2 is preferably long enough to allow the laminate (base layer sheet 102 and wear layer film 148) to be heated from the temperature leaving the nip at roller 142 to a sufficient elevated temperature for proper embossing. For an example using a 0.05cm (20 mil) RVF wear layer, the laminate preferably may be heated to a temperature of at least about and including 148.9°C (300 degrees F) at the nip of the embossing roller 152. In one embodiment, the temperature of the laminate is about 320 degrees F at the embossing roller 152 for proper embossing.

The distance C2 will be based in part on the linear velocity of the surface 122 of the process drum 120 (e.g. fpm) and the heat output (BTUs) of the radiant surface heaters used. Adjustable heater controls are provided to regulate the heat output from radiant heaters 126 to achieve the foregoing laminate temperature desired at the nip of the embossing station 150.

In one representative embodiment, circumferential distance C2 may be about 1.5meters (5 feet) at a corresponding linear surface velocity or speed of 27.4 meters per minute (90 fpm) of drum surface 122 to provide a time period of about 3.3 seconds for heating the laminate before embossing.

Advantageously, it should be noted that preheating the wear layer film 148 at laminating station 140, which can add about 37.8°C (100 degrees F) to the film, reduces the amount of heat which must be added after the application of the wear layer film to substrate, thereby reducing surface heat requirements and dwell time on the drum process. It has been found that the embossing steps of the present continuous drum process with the accompanying embossing roller imparts improved and sharply defined embossed images on the laminate.

In some possible embodiments, a third lamination step may be optionally be performed at embossing station 150 to add pre-embossed, pre-coated, and/or other type films 172 onto wear layer film 148 from a bolt or roll 170 prior to or instead of embossing. If a pre-embossed film or sheet is added, a roller 152 with a smooth outer surface finish in lieu of an embossed roller having an undulating outer surface with the reverse image of the embossing pattern formed thereon may be used.

Following completion of the embossing operation, the laminate floor covering product continues on process drum 120 to a release point P2 associated with a release roller 162 as shown in FIG. 1. Release roller 162 is operable to maintain tension in and contact of the laminate with drum 120 until removal from the drum.

Since the laminate (i.e. base layer sheet 102) temporarily adheres to outer surface 122 of drum 120 via principles of hot stick adhesion and cold release for vinyl based products, the laminate must cooled sufficiently to a release temperature wherein the laminate sheet will no longer adhere to and separate from the drum. In one embodiment, the cooling is provided by a plurality of water sprays 160 positioned proximate to drum 120 which spray water directly onto the laminate product. In addition, the water sprays 160 rapidly cools the exposed surface of the wear layer film below the glass transition temperature of its polymer, thereby imparting dimensional stability of the laminate. The release temperature may vary depending on the composition of the base layer sheet 102 and thickness of the base layer sheet and wear layer film 148.

In order to provide adequate time to cool the laminate for release from process drum 120, release roller 162 is separated from embossing station 150 by an arcuate circumferential distance C3. In one embodiment, C3 is about 1.5 meters (5 feet) at a corresponding linear velocity of outer surface 122 of about 27.4 meters per minute (90 fpm). This provides a dwell time for cooling of about 3.3 seconds.

In the embodiment shown in FIG. 1, the laminating stations and release point P2 are arranged to take advantage of the assistance of gravity for releasing the laminate floor covering product from process drum 120 under the weight of the laminate. Other arrangements, however, are possible.

After the laminate floor covering product is removed from process drum 120, further back end of line operations such as sizing and cutting may performed to produce tile, planks, or other shapes as desired.

### Example I

Several runs were performed using a 0.37cm (145 mil) vinyl base layer sheet 102 (blanket) with 28% binder which was laminated with a 20 ml rigid vinyl film (RVF) wear layer 148. Average base layer sheet 102 temperature was about 165.6°C (330 degrees F) before laminating at wear layer laminating station 140 (reference FIG. 1). The heated laminating roller 142 temperature was about 82.2°C (180 degrees F). Temperature of base layer and RVF film laminate at the laminating roller 142 measured about 110°C (230 degrees F). No blistering or wrinkling of the wear layer film 102 was observed. Final gauge of the composite laminate floor covering product was about 0.38cm (150 mils). The test was performed using a 40.6cm (16-inch) diameter drum.

Using the same setup in the Example I above, a cooler laminating roller 142 temperature measured at about 65.5°C (150 degrees F) was used for a run. The 0.05cm (20 mil) RVF wear layer 148 wrinkled off the 0.37cm (145 mil) base layer sheet 102 due to inadequate adhesion formed between the RVF and base layer sheet. A hotter laminating roller 142 temperature measured at about 110°C (230 degrees F) was attempted. The 0.05cm (20 mil) wear layer film 148 tended to stick to laminating roller 142 and wrinkled at the nip of the laminating roller. This defect was attributed to the wear layer film 148 not being free to slide on the roller 142 face as required

### Example II

A 110 mil vinyl base layer sheet 102 (blanket) with 28% binder was laminated with a 0.05cm (20 ml) rigid vinyl film (RVF) wear layer 148. The base layer sheet 102 temperature was about 171.1°C (340 degrees F) before laminating at wear layer laminating station 140 (reference FIG. 1). The heated laminating roller 142 temperature was about 82.2°C (180 degrees F). Temperature of base layer and RVF film laminate at the laminating roller 142 measured about 110°C (230 degrees F). No blistering or wrinkling of the wear layer film 102 was observed. Final gauge of the composite laminate floor covering product was about 0.30cm (120 mils).

## Claims

1. A method for forming laminated floor covering product comprising:
heating a base layer sheet (102) comprising a plastic material to a first temperature;
receiving the heated base layer sheet (102) onto a surface of a rotating process drum (120);
applying a patterned film (136) to the base layer sheet (102) by laminating at a circumferential location on the process drum (120) located before a first laminating station (140);
preheating a wear layer film (148) separate from the process drum (120) to a second temperature; and
laminating the wear layer film (148) onto the patterned film (136) at the first laminating station (140) thereby forming a flooring laminate.

2. The method of claim 1, further comprising embossing the flooring laminate at a second laminating station (150) after the step of laminating the wear layer film (148) onto the patterned film (136).

3. The method of claim 2, further comprising heating the flooring laminate to a third temperature between the first and second laminating stations (140, 150).

4. The method of claim 3, wherein the third temperature is higher than the second temperature.

5. The method of any foregoing claim, wherein the second temperature of the wear layer film (148) is lower than the first temperature of the base layer sheet (102).

6. The method of any foregoing claim, wherein the wear layer film (148) is rigid vinyl film.

7. The method of any foregoing claim, wherein the wear layer film (148) has a thickness of at least 0.51 mm (20 mils).

8. The method of any foregoing claim, wherein the step of applying the patterned film (136) is at a third laminating station (130) prior to laminating the wear layer film(148).

9. The method of any foregoing claim, wherein the wear layer film (148) has a thickness of at least 0.51 mm (20 mils).

10. The method of any foregoing claim, wherein the second temperature of the wear layer film (148) is from 27 to 93 degrees C (80 to 200 degrees F).

11. The method of claim 3, wherein the third temperature is at least about 160 degrees C (320 degrees F).

12. The method of any foregoing claim, wherein the process drum (120) has a diameter of about 2.44 metres (8 feet) or more.

13. The method of any foregoing claim, further comprising a release roller (162) at a fifth circumferential location on the process drum (120), the release roller (162) being operable to maintain tension in and contact of the flooring laminate with process drum (120) until the laminate is removed from the process drum (120).

## Patentansprüche

1. Verfahren zum Bilden eines Laminatbodenbelagsprodukts, umfassend:
Erhitzen einer Basisschichtplatte (102), die ein Kunststoffmaterial umfasst, auf eine erste Temperatur;
Aufnehmen der erhitzten Basisschichtplatte (102) auf einer Oberfläche einer sich drehenden Prozesstrommel (120) ;
Aufbringen einer strukturierten Folie (136) auf die Basisschichtplatte (102) durch Laminieren an einer Umfangsstelle auf der Prozesstrommel (120), die sich vor einer ersten Laminierstation (140) befindet;
Vorerhitzen einer Nutzschichtfolie (148), die von der Prozesstrommel (120) getrennt ist, auf eine zweite Temperatur und
Laminieren der Nutzschichtfolie (148) auf die strukturierte Folie (136) an der ersten Laminierstation (140), wodurch ein Bodenlaminat gebildet wird.

2. Verfahren nach Anspruch 1, das weiterhin ein Prägen des Bodenlaminats an einer zweiten Laminierstation (150) nach dem Schritt des Laminierens der Nutzschichtfolie (148) auf die strukturierte Folie (136) umfasst.

3. Verfahren nach Anspruch 2, das weiterhin ein Erhitzen des Bodenlaminats auf eine dritte Temperatur zwischen der ersten und der zweiten Laminierstation (140, 150) umfasst.

4. Verfahren nach Anspruch 3, wobei die dritte Temperatur höher als die zweite Temperatur ist.

5. Verfahren nach einem vorhergehenden Anspruch, wobei die zweite Temperatur der Nutzschichtfolie (148) niedriger als die erste Temperatur der Basisschichtfolie (102) ist.

6. Verfahren nach einem vorhergehenden Anspruch, wobei die Nutzschichtfolie (148) eine steife Vinylfolie ist.

7. Verfahren nach einem vorhergehenden Anspruch, wobei die Nutzschichtfolie (148) eine Dicke von mindestens 0,51 mm (20 mil) aufweist.

8. Verfahren nach einem vorhergehenden Anspruch, wobei der Schritt des Aufbringens der strukturierten Folie (136) an einer dritten Laminierstation (130) vor dem Laminieren der Nutzschichtfolie (148) ist.

9. Verfahren nach einem vorhergehenden Anspruch, wobei die Nutzschichtfolie (148) eine Dicke von mindestens 0,51 mm (20 mil) aufweist.

10. Verfahren nach einem vorhergehenden Anspruch, wobei die zweite Temperatur der Nutzschichtfolie (148) von 27 bis 93 Grad C (80 bis 200 Grad F) beträgt.

11. Verfahren nach Anspruch 3, wobei die dritte Temperatur mindestens etwa 160 Grad C (320 Grad F) beträgt.

12. Verfahren nach einem vorhergehenden Anspruch, wobei die Prozesstrommel (120) einen Durchmesser von etwa 2,44 Meter (8 Fuß) oder mehr aufweist.

13. Verfahren nach einem vorhergehenden Anspruch, das weiterhin eine Trennwalze (162) an einer fünften Umfangsstelle auf der Prozesstrommel (120) umfasst, wobei die Trennwalze (162) dazu betreibbar ist, eine Spannung in dem und einen Kontakt des Bodenlaminats mit der Prozesstrommel (120) aufrechtzuerhalten, bis das Laminat von der Prozesstrommel (120) entfernt wird.

## Revendications

1. Procédé de formation de produit de plancher laminé consistant à :
chauffer un revêtement comportant une couche de base (102), constitué d'une matière plastique, à une première température ;
recevoir le revêtement comportant une couche de base chauffé (102) sur une surface d'un tambour de traitement rotatif (120) ;
appliquer par laminage un film à motif (136) sur le revêtement comportant une couche de base (102) à hauteur d'un emplacement circonférentiel du tambour de traitement (120) positionné en amont d'une première station de laminage (140) ;
préchauffer un film de couche d'usure (148) indépendamment du tambour de traitement (120) à une deuxième température ; et
laminer le film de couche d'usure (148) sur le film à motif (136) à hauteur de la première station de laminage (140), formant ainsi un plancher laminé.

2. Procédé selon la revendication 1, consistant en outre à gaufrer le plancher laminé à hauteur d'une deuxième station de laminage (150) suite à l'étape consistant à laminer le film de couche d'usure (148) sur le film à motif (136).

3. Procédé selon la revendication 2, consistant en outre à chauffer le plancher laminé à une troisième température entre la première et la deuxième stations de laminage (140, 150).

4. Procédé selon la revendication 3, dans lequel la troisième température est supérieure à la deuxième température.

5. Procédé selon l'une quelconque des revendications précédentes, dans lequel la deuxième température du film de couche d'usure (148) est inférieure à la première température du revêtement comportant une couche de base (102).

6. Procédé selon l'une quelconque des revendications précédentes, dans lequel le film de couche d'usure (148) est un film de vinyle rigide.

7. Procédé selon l'une quelconque des revendications précédentes, dans lequel le film de couche d'usure (148) a une épaisseur d'au moins 0,51 mm (20 mils).

8. Procédé selon l'une quelconque des revendications précédentes, dans lequel l'étape consistant à appliquer le film à motif (136) a lieu à hauteur d'une troisième station de laminage (130) avant le laminage du film de couche d'usure (148) .

9. Procédé selon l'une quelconque des revendications précédentes, dans lequel le film de couche d'usure (148) a une épaisseur d'au moins 0,51 mm (20 mils).

10. Procédé selon l'une quelconque des revendications précédentes, dans lequel la deuxième température du film de couche d'usure (148) se situe dans la plage de 27 à 93 degrés C (80 à 200 degrés F).

11. Procédé selon la revendication 3, dans lequel la troisième température est au moins d'environ 160 degrés C (320 degrés F).

12. Procédé selon l'une quelconque des revendications précédentes, dans lequel le diamètre du tambour de traitement (120) est d'environ 2,44 mètres (8 pieds) ou plus.

13. Procédé selon l'une quelconque des revendications précédentes, comprenant en outre un rouleau de déblocage (162) situé à hauteur d'un cinquième emplacement circonférentiel sur le tambour de traitement (120), le rouleau de déblocage (162) étant actionné pour maintenir la pression et le contact du plancher laminé avec le tambour de traitement (120) jusqu'à l'enlèvement du laminé du tambour de traitement (120).
